# EUROPEAN PATENT SPECIFICATION

(11) **EP 3 344 492 B1**
(45) Date of publication and mention of the grant of the patent: **04.03.2020**
(21) Application number: 16766437.4
(22) Date of filing: 06.09.2016
(51) Int. Cl.: B60N 2/56

(54) **VEHICLE SEAT WITH IMPROVED THERMAL CONDUCTIVITY**
FAHRZEUGSITZ MIT VERBESSERTER HITZLEITUNG
SIÈGE DE VÉHICULE À CONDUCTIVITÉ THERMIQUE AMÉLIORÉE

(30) Priority: 04.09.2015 US 201562214383 P
(43) Date of publication of application: 11.07.2018
(73) Proprietor: Magna Seating Inc., Aurora, Ontario L4G 7K1 (CA)
(72) Inventor: KOZLOWSKI, Eric, Oakland Township, MI 48363 (US)
(74) Representative: Glawe, Delfs, Moll
(86) International application number: PCT/US2016/050404
(87) International publication number: WO 2017/041096

(56) References cited:
- WO-A1-2014/052145
- CA-A1- 2 313 779
- DE-A1-102011 001 915
- US-A1- 2008 099 458
- US-A1- 2011 290 785
- US-A1- 2012 198 616

## Description

### CROSS-REFERENCE TO RELATED APPLICATIONS

This application claims priority to United States Provisional Application No. 62/214,383, filed on September 4, 2015.

### BACKGROUND OF THE INVENTION

### 1. Field of the Invention

The present invention relates to a seat assembly in an automotive vehicle having a heating and cooling mechanism and an improved thermally conductive trim cover assembly. More particularly, the invention relates to a thermoelectric mechanism for rapidly heating and cooling the surface of the seat assembly for seat occupant comfort and a thermally conductive trim cover assembly for efficiently dispersing the heat from the mechanism to and from the surface of the seat assembly.

### 2. Description of Related Art

Automotive vehicles include one or more seat assemblies having a seat cushion and a seat back for supporting a passenger or occupant above a vehicle floor. The seat assembly is commonly mounted to the vehicle floor by a riser assembly. The seat back is typically operatively coupled to the seat cushion by a recliner assembly for providing selective pivotal adjustment of the seat back relative to the seat cushion.

It is commonly known to provide seat assemblies with heating and cooling mechanisms for selectively heating and cooling the surface of the seat for seat occupant comfort. These known heating and cooling mechanisms are typically independent mechanisms. For example, it is common to provide an electric wire heating pad between the foam pad and trim cover of the seat cushion or seat back which is electrically actuated by the power from the vehicle battery to electrically charge the heating pad and provide heat to the surface of the seat cushion or seat back. It is also known to provide fans and air ducts to force cool air through the foam pad and trim cover and provide cool air to the surface of the seat cushion or seat back. It is also known to provide fans and ducts to draw warm, moist air away from the seating surface to provide a gradual cooling effect.

WO 2014/052145 A1 discloses a vehicle seat including seat pads included in seat bottoms and seat backs. The seat pads are configured to provide both a cold sensation and a warming sensation to an occupant sitting on the seat pads. An occupant-support base of the vehicle seat includes a cushion cover defining a cushion-receiving space and a cushion positioned to lie in the cushion-receiving space.

However, current heating and cooling mechanisms require a fair amount of time and power to generate sufficient heat or cool air to affect the temperature of the seat assembly and the desired comfort for the seat occupant.

It is desirable, therefore, to provide a heating and cooling mechanism which can rapidly or almost instantly provide heating or cooling to the surface of the seat assembly. It is also desirable to provide an improved thermally conductive trim cover assembly for dispersing the heat to and from the surface of the seat assembly.

### SUMMARY OF THE INVENTION

**The invention provides a thermally conductive trim with the features of claim 1.**

### BRIEF DESCRIPTION OF THE DRAWINGS

Advantages of the present invention will be readily appreciated as the same becomes better understood by reference to the following detailed description when considered in connection with the accompanying drawings wherein:
Figure 1 is a schematic perspective view of a seat assembly for an automotive vehicle;
Figure 2 is a perspective view of a seat cushion of the seat assembly showing a cellular foam pad with a thermoelectric mechanism;
Figure 3 is an enlarged view of the thermoelectric mechanism of Figure 2;
Figure 4 is a perspective view of a thermally conductive plus pad of the trim cover assembly;
Figure 5 is a perspective view of a thermally conductive plus pad of the trim cover assembly;
Figure 6 is a perspective view of a thermally conductive plus pad of the trim cover;
Figure 7 is a perspective view of a thermally conductive plus pad of the trim cover assembly;
Figure 8 is perspective view of a copper mesh plus pad and thermally conductive trim cover according to the invention;
Figure 9 is a top view of the thermally conductive trim cover of Figure 8; and
Figure 10 is a bottom view of the thermally conductive trim cover of Figure 8.

### DETAILED DESCRIPTION OF THE EMBODIMENTS

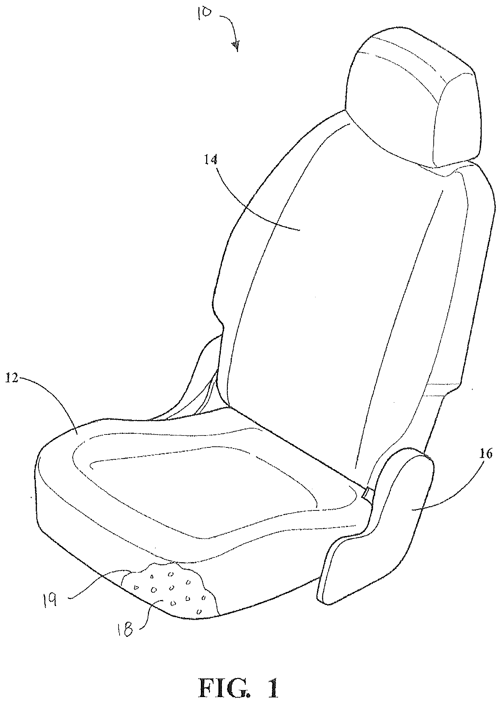

Referring to the Figures, wherein like numerals indicate like or corresponding parts throughout the several views, a seat assembly 10 for use in an automotive vehicle is generally shown in Figure 1 and includes a generally horizontal seat cushion 12 and a generally upright seat back 14 for supporting a seat occupant within the vehicle as is commonly known in the art. The seat back 14 is typically operatively coupled to the seat cushion 12 by a recliner assembly 16 for providing pivotal movement between an upright seating position and a plurality of reclined seating positions.

Each of the seat cushion 12 and seat back 14 commonly include a molded resilient cellular foam pad 18 encased in a trim cover assembly 19, commonly of cloth, vinyl, or leather. The present application relates to a heating and cooling system operatively coupled to the seat cushion 12 and/or seat back 14 for selectively heating and cooling the surface of the seat assembly 10. A heating and cooling system for a vehicle seat assembly generally comprises three components affecting the system: the engine, or heating and cooling mechanism; an optional plus pad on the surface of the foam pad; and a trim cover, often of leather. The plus pad is typically attached to the bottom surface of the trim cover forming a combined trim cover assembly 19. Each of the components of the heating and cooling system must be addressed to maximize the efficiency and effectiveness of the system.

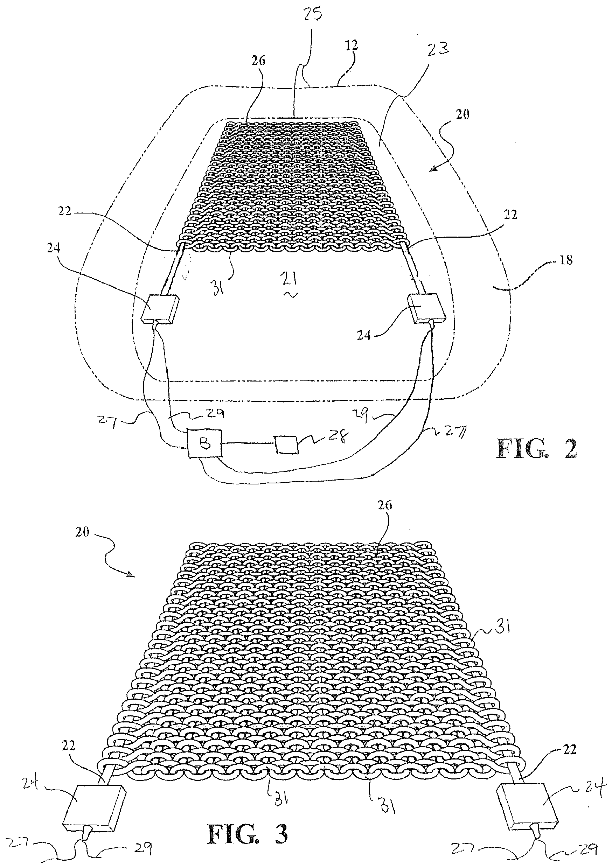

First, referring to Figures 2 and 3, a foam pad 18 of a seat cushion 12 is shown with the trim cover assembly 19 removed. A heating and cooling mechanism 20 is coupled to the top surface 21 of the foam pad 18 and includes a pair of spaced apart and generally parallel heat pipes 22 each positioned in and along foam trenches 23 formed in the foam pad 18 so as to not interfere with the comfort of the seat assembly 10. The heat pipes 22 could also be positioned at other orientations and locations on the foam pad 18. For instance, the heat pipes 22 could be oriented side-to-side and positioned at the seat bight line 25 or at the front portion of the cushion foam pad 18. The heat pipes 22 may include copper piping or other thermally conductive material pipe, such as aluminum, silver, or graphite. A thermoelectric component or generator 24, such as a Peltier device, is electrically connected to each heat pipe 22 for rapidly heating or cooling each of the heat pipes 22. That is, the thermoelectric generator 24 includes positive and negative electrical feed wires 27, 29 connected to a switch 28 and a power source (such as the vehicle battery B) within the vehicle for providing electrical current to the generator 24. Further, providing current in one polarity to the thermoelectric generator 24 produces heat and reversing the polarity produces cooling both of which are transferred to the respective heat pipes 22. It should be appreciated that in this manner the thermoelectric generators 24 may be positioned remotely from the heat pipes 22 and also remotely from the seating surface. A distribution pad 26 is connected and suspended between the spaced apart heat pipes 22 to effectively transfer heat away from or to the surface of the seat cushion 12. The distribution pad 26 in the preferred embodiment is preferably a woven pad of expanded graphite material strands 31 mixed with a cotton core of yarn to create a very conductive pad of material. That is the strands 31 may include a core of cotton yarn material wrapped or encased in a layer of expanded graphite material. A plurality of the strands 31 are then interwoven in a chain link manner as shown in Figures 2 and 3 to form planar woven distribution pad 26. It should be appreciated that the distribution pad 26 may comprise other highly conductive woven materials such as silver, aluminum, or other conductive materials. The heat pipes 22 are fed through the weave or loops of the pad 26 formed by the interwoven strands 31 to create contact between the heat pipes 22 and the distribution pad 26 for transferring the thermal conductivity (heat or cold) from the heat pipes 22 to the pad 26. Finally, the interwoven strands 31 forming the distribution pad 26 create a flexible and resilient pad 26 between the foam pad 18 and trim cover assembly 19 so as to conform to the shape and contour of the top surface 21 of the foam pad 18 and not be detected by the seat occupant.

The thermoelectric mechanism 20 provides rapid and almost instantaneous heating or cooling to the seat assembly 10 with low power consumption. For example, the mechanism 20 requires approximately 60 watts of power to generate preferred heating and approximately 40-90 watts of power in reverse polarity to generate preferred cooling.

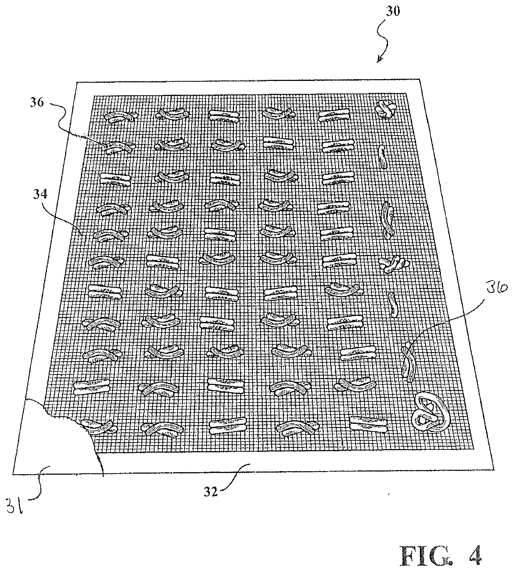

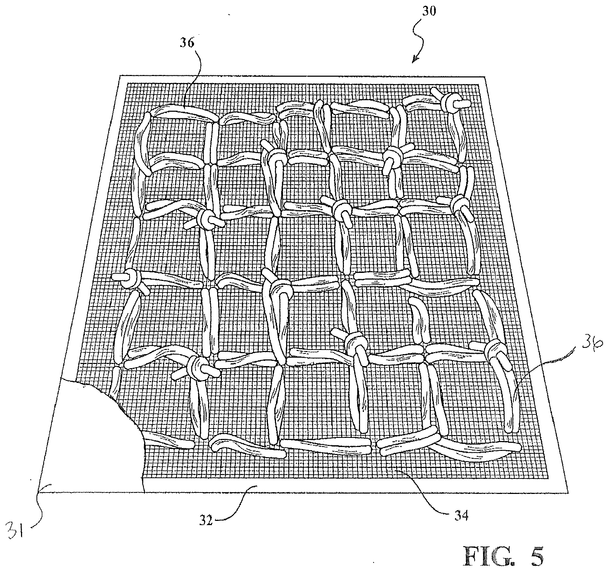

Referring to Figures 4 and 5, a thermally conductive plus pad is shown at 30 forming part of the trim cover assembly 19. That is, a trim cover assembly typically includes a trim cover of cloth, vinyl or leather and a foam plus pad attached to the bottom surface of the trim cover for encasing the foam pad 18 as is commonly known in the seating art. The thermally conductive plus pad 30 is an alternative to the traditional foam plus pad attached to the trim cover 31, or seated between the trim cover 31 and the cushion foam pad 18, and includes a thin layer of polyurethane cellular foam padding 32 with an attached top layer or sheet of cloth 34 and a continuous strand of graphite yarn 36 woven and sewn through the foam padding 32 and top cloth layer 34 to increase the thermal conductivity of the plus pad 30. The graphite yarn 36 is approximately 2mm in diameter, however the diameter of yarn may vary. The graphite yarn 36 is also soft and flexible such that it can be woven through the foam padding 32 and also be relatively undetected from the top surface of the seat cushion 12. Figure 4 shows one preferred weave pattern of the graphite yarn 36 and Figure 5 shown an alternative weave pattern of the graphite yarn 36. However, it should be appreciated that the graphite yarn 36 is one continuous long strand woven through the padding 32 to provide a continuous thermal pathway and increase or improve the overall thermal conductivity of the entire plus pad 30. It should be appreciated that the graphite yarn 36 may comprise other highly conductive woven materials such as silver, aluminum, or other conductive materials.

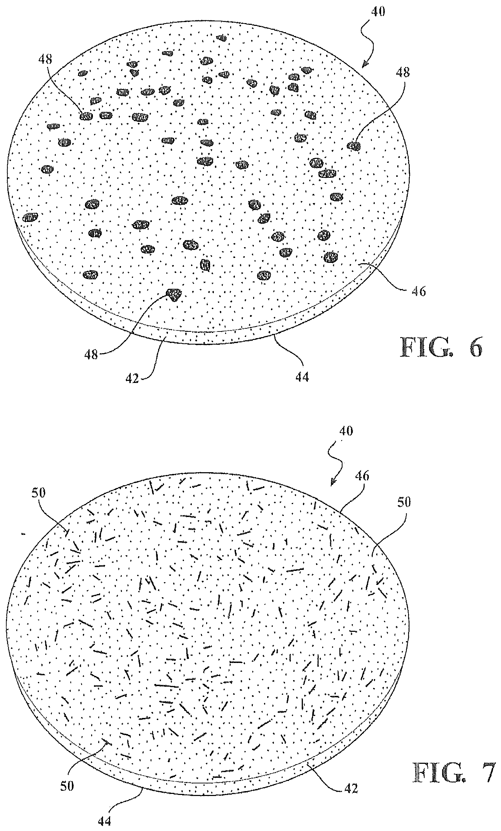

Referring to Figures 6 and 7, alternative embodiments of a plus pad 40 are shown. The plus pad 40 includes a thin layer of polyurethane cellular foam padding 42 forming a top surface 44 and bottom surface 46. The foam padding 42 is embedded with either, graphite yarn 48, Figure 6, or chopped graphite flakes 50, Figure 7, during the foaming process to create a thermal pathway through the graphite material between the top and bottom surfaces 44, 46 of the foam padding 42 and again increase the overall thermal conductivity of the plus pad 40. It should be appreciated that the graphite yarn 48 or graphite flakes 50 may comprise other highly conductive materials such as silver, aluminum, or other conductive materials.

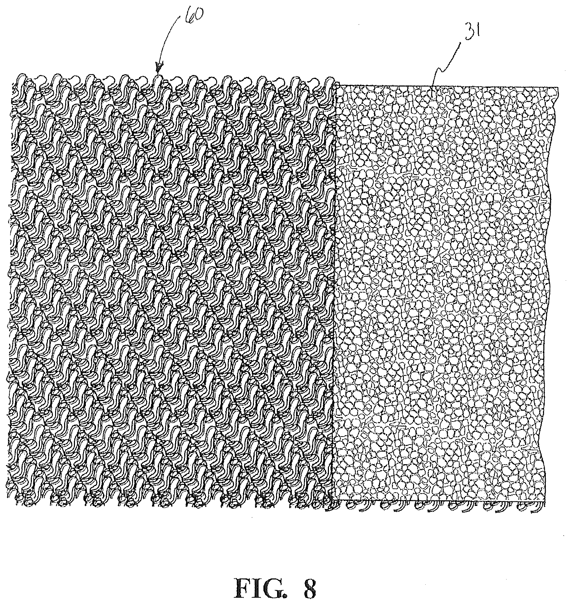

Still further, referring to Figure 8, an alternative is shown wherein the plus pad is replaced entirely with a sheet of woven copper mesh material forming a thermally conductive mesh pad 60. The copper mesh is comprised of interwoven strands or copper wire material to form the continuous woven sheet of the mesh pad 60 as shown in Figure 8. The length and diameter of the copper wire may vary without altering the scope of the invention. The copper mesh pad 60 is highly thermally conductive, flexible, and resilient, and may be positioned between the trim cover 31 and foam pad 18. It should be appreciated that the mesh pad 60 may comprise other highly conductive woven materials such as silver, aluminum, or other conductive metals.

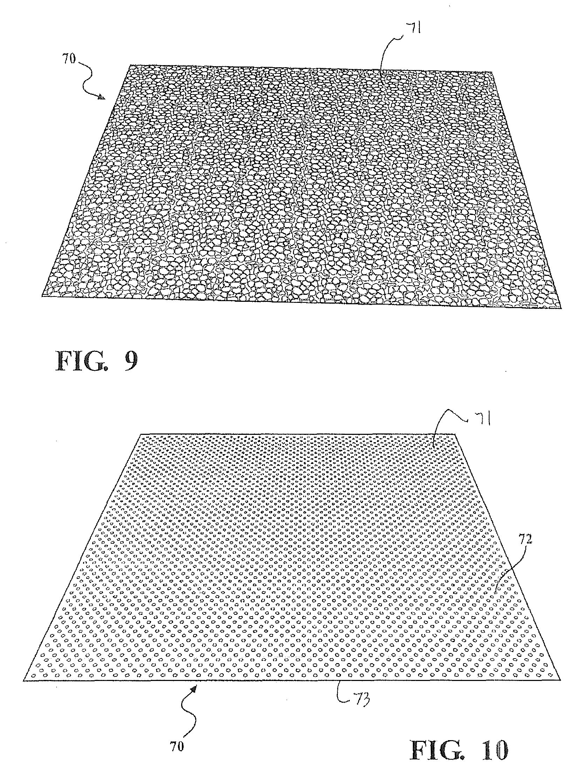

Finally, referring to Figures 9 and 10, an improved thermally conductive trim cover according to the invention is shown at 70. The trim cover 70 of Figures 9 and 10 is a sheet or skin layer of leather material. Typically imperfections in a skin layer of leather are filled with a polymer spackle spread on the back surface of the leather as is commonly known in the leather manufacturing process. In the present invention, the back surface 71 of the leather skin is spackled with a thermally conductive paste to add a layer of conductive material to the trim cover 70. In the preferred embodiment, the thermally conductive paste is comprised of graphite and/or aluminum particles with a preferred particle size of 30 microns or less having an acrylic or urethane binder system to contain the conductive particles. It should be appreciated that the paste may also be comprised of other filler materials of high conductivity such as copper. Further, the skin of leather is often perforated with small holes therethrough to allow air circulation through the skin layer. It is also possible to fill these perforations in the skin of leather with the thermally conductive paste, as shown at 72 in Figure 10, and form a conductive pathway through the perforations or holes from the bottom surface 71 to the top surface 73 of the trim cover 70. It should be appreciated that the thermally conductive trim cover 70 may be used in combination with any of the above-described plus pads 30, 40, 60 to improve the overall thermal conductivity of the seat assembly 10.

The invention has been described in an illustrative manner, and it is to be understood that the terminology, which has been used, is intended to be in the nature of words of description rather than of limitation. Many modifications and variations of the present invention are possible in light of the above teachings. It is, therefore, to be understood that within the scope of the appended claims, the invention may be practiced other than as specifically described.

## Claims

1. A thermally conductive trim cover (70) adapted for use on a seat assembly (10), the trim cover comprising a layer of leather material having a top surface (73) and a bottom surface (71) and a thermally conductive paste layer covering the bottom surface (71) of the layer of leather material to form a thermally conductive trim cover.

2. The thermally conductive trim cover (70) as set forth in claim 1, wherein the layer of leather material includes a plurality of apertures extending therethrough between the top and bottom surface.

3. The thermally conductive trim cover (70) as set forth in claim 2, wherein the plurality of apertures in the layer of leather material are filled with the thermally conductive paste.

4. The thermally conductive trim cover (70) as set forth in claim 3, wherein the thermally conductive paste includes graphite particles disposed in a urethane binder to improve the thermal conductivity of the trim cover between the top (73) and bottom surface (71) of the layer of leather material.

## Patentansprüche

1. Wärmeleitfähiger Sitzbezug (70), der zur Verwendung auf einer Sitzanordnung (10) geeignet ist, wobei der Sitzbezug eine Schicht aus Ledermaterial mit einer Oberseite (73) und einer Unterseite (71) und eine Wärmeleitpastenschicht umfasst, welche die Unterseite (71) der Schicht aus Ledermaterial bedeckt, um einen wärmeleitfähigen Sitzbezug zu bilden.

2. Wärmeleitfähiger Sitzbezug (70) nach Anspruch 1, wobei die Schicht aus Ledermaterial eine Vielzahl von Öffnungen beinhaltet, die sich zwischen der Ober- und der Unterseite durch dieses hindurch erstrecken.

3. Wärmeleitfähiger Sitzbezug (70) nach Anspruch 2, wobei die Vielzahl von Öffnungen in der Schicht aus Ledermaterial mit der Wärmeleitpaste gefüllt ist.

4. Wärmeleitfähiger Sitzbezug (70) nach Anspruch 3, wobei die Wärmeleitpaste Graphitpartikel beinhaltet, die in einem Urethan-Bindemittel angeordnet sind, um die Wärmeleitfähigkeit des Sitzbezugs zwischen der Ober- (73) und der Unterseite (71) der Schicht aus Ledermaterial zu verbessern.

## Revendications

1. Couverture d'habillage thermoconductrice (70) adaptée pour être utilisée sur un assemblage formant siège (10), la couverture d'habillage comprenant une couche de matériau à base de cuir ayant une surface supérieure (73) et une surface inférieure (71), et une couche de pâte thermoconductrice couvrant la surface inférieure (71) de la couche de matériau à base de cuir pour former une couverture d'habillage thermoconductrice.

2. Couverture d'habillage thermoconductrice (70) selon la revendication 1, dans laquelle la couche de matériau à base de cuir inclut une pluralité d'ouvertures s'étendant à travers celle-ci entre la surface supérieure et la surface inférieure.

3. Couverture d'habillage thermoconductrice (70) selon la revendication 2, dans laquelle la pluralité d'ouvertures dans la couche de matériau à base de cuir sont remplies avec la pâte thermoconductrice.

4. Couverture d'habillage thermoconductrice (70) selon la revendication 3, dans laquelle la pâte thermoconductrice inclut des particules de graphite disposées dans un liant à base d'uréthane pour améliorer la conductivité thermique de la couverture d'habillage entre la surface supérieure (73) et la surface inférieure (71) de la couche de matériau à base de cuir.
